# EUROPEAN PATENT APPLICATION

(11) **EP 4 215 343 A1**
(43) Date of publication of application: **26.07.2023**
(21) Application number: 22156974.2
(22) Date of filing: 16.02.2022
(51) Int. Cl.: B29C 64/129, B29C 64/291, B29C 64/259, B33Y 10/00, B33Y 30/00, A61C 7/00, B29L 31/00

(54) **ADDITIVE MANUFACTURING APPARATUS WITH OPTICAL MEANS FOR DIFFUSING PROJECTED UV LIGHT TOWARDS PHOTOCURABLE RESIN**

(30) Priority: 24.01.2022 EP 22153014
(71) Applicant: DENTSPLY SIRONA Inc., York, PA 17401 (US); Sirona Dental Systems GmbH, 64625 Bensheim (DE)
(72) Inventor: SAUL, Sebastian, 64625 Bensheim (DE); Brandes, Christoph, 64625 Bensheim (DE)
(74) Representative: Özer, Alpdeniz

(57) **Abstract**

The present invention relates to an additive manufacturing apparatus (1) for additively manufacturing a component (2), comprising: a resin vat unit (3) which comprises: a reservoir (4) for storing UV light photocurable resin (5); and a UV-transparent window (6-4) at the bottom of the reservoir (4), wherein said UV-transparent window (6-4) includes a UV-transparent plate (6-4a) and a UV-transparent anti-adhesive flexible foil (6-4b); a projection unit (7) for projecting UV light (8) through the UV-transparent window (6-4) into the reservoir (4); a movable building platform (9) having a surface (9a) onto which said component (2) can be formed through layerwise curing of said resin (5). The UV-transparent window (6-4) further comprises: an optical means (6-5) which is adapted to diffuse the projected UV light (8) towards the building platform (9) into a region (R) where the UV light photocurable resin (5) is to be layerwise cured, wherein the optical means (6-5) is arranged in the light path of the projected UV light (8).

## Description

### TECHNICAL FIELD OF THE INVENTION

The present invention relates to an additive manufacturing apparatus for additively manufacturing 3D components such as dental restorations and dental appliances.

### BACKGROUND ART OF THE INVENTION

In additive manufacturing techniques, such as stereolithography (SLA) or digital light processing (DLP), a 3D (three dimensional) component is printed layer-by-layer through light-based curing of a liquid printing medium i.e., a photocurable resin, which is selectively cured under the influence of UV radiation. The photocurable resin can become finally transparent or non-transparent/colored after the curing/polymerization process depending on the type of the photocurable resin material used. In a commonly known variation of additive manufacturing, the 3D components are preferably pulled by means of a building platform, upside-down out of the photocurable resin in a resin vat. Other variations of additive manufacturing are also known to those skilled in the art.

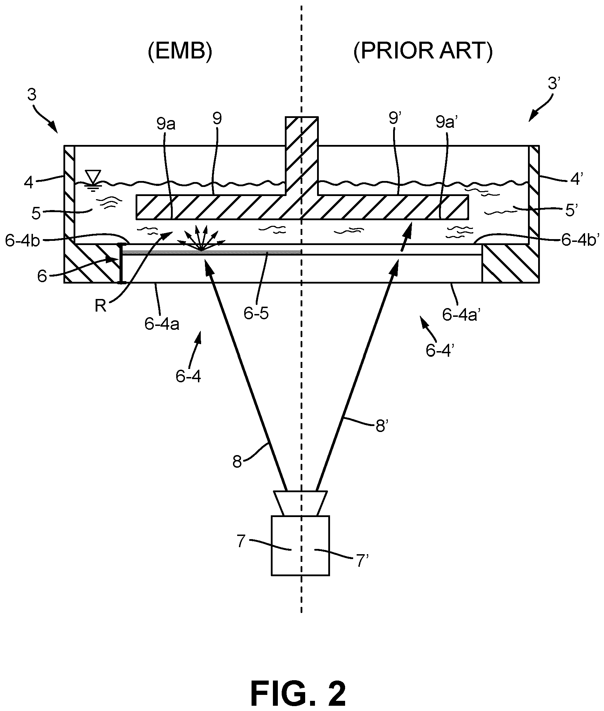

Fig. 2 illustrates a comparative example in which the right-hand side shows a vertical cross-sectional partial view of an additive manufacturing apparatus according to the prior art. The prior art additive manufacturing apparatus comprises: a resin vat unit (3') which comprises a reservoir (4') for storing UV light photocurable resin (5'), and a UV-transparent window (6-4') at the bottom of the reservoir (4'), wherein said UV-transparent window (6-4') includes a UV-transparent plate (6-4a') and a UV-transparent anti-adhesive flexible foil (6-4b'); a projection unit (7') for projecting UV light (8') through the UV-transparent window (6-4') into the reservoir (4'); and a movable building platform (9') having a surface (9a') onto which a 3D component can be produced through layerwise curing of the said resin (5').

A problem with the prior art additive manufacturing apparatus in Fig 2 is that the printed 3D components subsequently require mechanical surface treatment such as polishing, grinding for obtaining a smooth surface. In general, dental restorations and appliances can't be used directly after 3D printing without such mechanical surface treatment being applied as it would cause an unpleasant sensation to the user. Therefore, the prior art has the disadvantages that additional staff, working hours, and consumables are required for the mechanical surface treatment of the printed 3D components, and thus all these incur respective costs.

Furthermore, when the 3D component is printed from a transparent photocurable resin, this results in a translucent 3D component because of the rough surface which affects the light transmission and causes a certain degree of opacity. However, 3D components such as dental aligners need to be clear to give a natural impression. Therefore, also some mechanical surface treatment is usually required to remove the opacity.

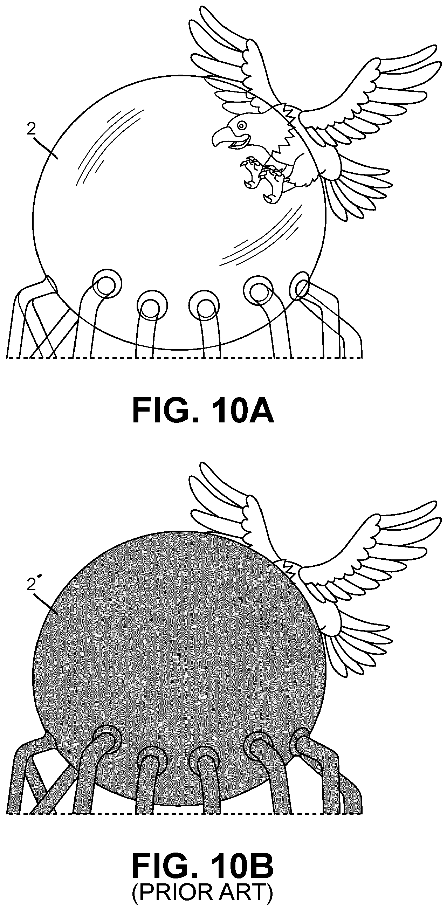

Fig. 10B illustrates a comparative example in which a 3D component (2') has been printed using a transparent photocurable resin through an additive manufacturing apparatus according to the prior art. In this comparative example, the 3D component (2') has not been subjected to any mechanical surface treatment. The eagle in the background illustrates that the 3D component (2') has a certain opacity because of the rough surface.

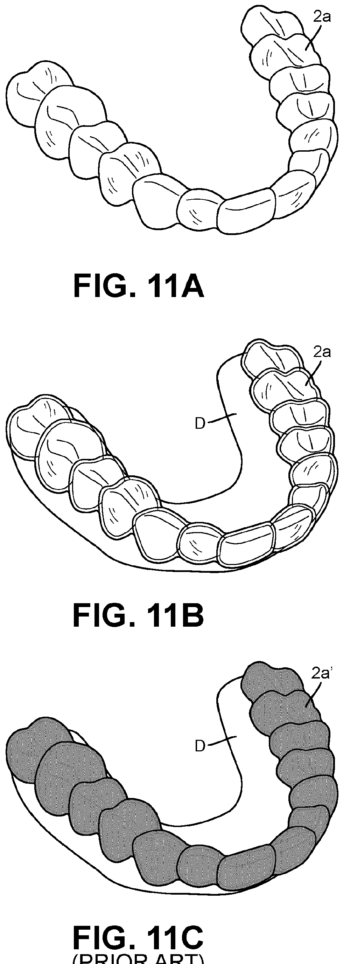

Fig. 11C illustrates another comparative example in which a dental aligner (2a') has been printed using a transparent photocurable resin through an additive manufacturing apparatus according to the prior art. Also, in this comparative example the aligner (2a') has not been subjected to any mechanical surface treatment and has been directly placed on a denture model (D). It can be seen that the aligner (2a') has a certain opacity because of the rough surface, and the teeth cannot be clearly seen.

In the prior art, anti-aliasing software is commonly used to improve edge-smoothness so that any mechanical surface treatment can be omitted. In principle, such anti-aliasing software is based on the use of 2D/3D digital filters which are commonly known in the art. However, the prior art has the disadvantages that anti-aliasing software increases the computational costs and is also limited by the geometry and magnification of the light source such as laser point diameter or pixel size. These physical limitations reduce the practical effects that can be achieved with it.

### DISCLOSURE OF THE INVENTION

An objective of the present invention is to overcome the above-mentioned problems of the prior art and to provide an additive manufacturing apparatus which enables the printing of 3D components with an improved smoothness and transparency to visible light such that any mechanical surface treatment and software based anti-aliasing can be dispensed with.

This objective has been achieved through the additive manufacturing apparatus as defined in claim 1, and the UV-transparent anti-adhesive flexible foil as defined in claim 10. The dependent claims relate to further embodiments and developments.

The present invention provides an additive manufacturing apparatus for additively manufacturing a 3D component. The additive manufacturing apparatus comprises: a resin vat unit which comprises: a reservoir for storing UV light photocurable resin; and a UV-transparent window at the bottom of the reservoir, wherein said UV-transparent window includes a UV-transparent plate and a UV-transparent anti-adhesive flexible foil; a projection unit for projecting UV light through the UV-transparent window into the reservoir; a movable building platform which has a surface onto which said 3D component can be formed through layerwise curing of said resin. The UV-transparent window further comprises an optical means which is adapted to diffuse the projected UV light towards the building platform into the region where the UV light photocurable resin is to be layerwise cured, wherein the said optical means is arranged in the light path of the projected UV light.

A major advantageous effect of the present invention is that through the said optical means the projected UV light can be diffused and thus the polymerization of the photocurable resin in the proximity of the adjacent pixels at an edge site becomes smoother. Thereby, also the overall scattering of the visible light throughout the printed 3D component can be reduced so that any opacity due to the roughness of the surface can be prevented especially when the 3D component has been printed with transparent photocurable resin material. Another major advantageous effect of the present invention is that the need for any mechanical surface treatment after the printing or any software-based ant-aliasing during the printing can be dispensed with, and thus the printed 3D components, for example, dental restorations and appliances such as clear aligners can be directly and immediately used by the patient while giving a pleasant sensation and having a clear appearance. Another major advantageous effect of the present invention is that the costs, processing time, consumables for the mechanical surface treatment can be saved. Still another major advantageous effect of the present invention is that the costs and processing time for the computational effort for the software-based anti-aliasing can be also saved.

The above-described optical means may be realized through frosting the surfaces of the UV-transparent anti-adhesive flexible foil or the surfaces the UV-transparent plate, or by adding light diffusing/scattering particles into the said foil or the said plate, or by using matrices of microlenses, or similar structures or mechanisms for diffusing the projected UV light. In one embodiment, at least one of the upper surfaces and the lower surface of the UV-transparent anti-adhesive flexible foil is frosted. Thus, the frosted surface of the UV-transparent anti-adhesive flexible foil can diffuse the projected UV light towards the photocurable resin and lead to a smoothening between the adjacent pixels to be cured. In an alternative embodiment, the UV-transparent anti-adhesive flexible foil includes light diffusing/scattering particles. The light diffusing/scattering particles can be introduced into the UV-transparent anti-adhesive flexible foil during its manufacturing by adding small impurities or cavities. The projected UV light can be additionally or alternatively actively diffused through the use of liquid crystal or electrochromate glass.

In another alternative embodiment, at least one of the upper surfaces and the lower surface of the UV-transparent plate is frosted. Thus, the frosted surface of the UV-transparent plate can diffuse the projected UV light towards the photocurable resin and lead to a smoothening between the adjacent pixels to be cured. In another alternative embodiment, the UV-transparent plate includes light diffusing/scattering particles. The light diffusing/scattering particles can be introduced into the UV-transparent plate during its manufacturing by adding small impurities or cavities.

In another alternative embodiment the optical means is realized through a matrix of light diffusing microlenses. Such a matrix can be produced as a separate transparent foil with 2D arrays of microlenses. The 2D array of microlenses can be placed below the UV-transparent anti-adhesive flexible foil, and further either above or below the UV-transparent plate. The 2D array of microlenses can be integrally provided with the UV-transparent plate or the UV-transparent anti-adhesive flexible foil.

According to the present invention it is also desired that the additive manufacturing apparatus can be retrofitted/equipped with the said optical means for diffusing the projected UV light. Therefore, in an embodiment, the resin vat unit is provided as a detachable unit which can be entirely removed from the additive manufacturing apparatus to allow exchanging the existing resin vat unit with another resin vat unit that includes the said optical means. Thus, the user can selectively attach a resin vat unit with any of the desired optical means as described above for achieving printing with smooth surfaces. Furthermore, in another embodiment the detachable resin vat unit is preferably provided with an RFID tag that includes information on the presence/absence of the said optical means in the UV-transparent window. In this embodiment, the additive manufacturing apparatus is provided with an RFID reader/writer. Thereby the additive manufacturing apparatus can recognize that the attached resin vat unit comprises such optical means, inform the user and apply the required printing mode. Alternatively, the user may enter via the user interface prior to the printing process the type of the resin vat unit attached. Alternatively, other sensing elements commonly known in the art can be used instead of the RFID tag.

According to the present invention it is also desired that the resin vat unit can be retrofitted/equipped with the optical means for diffusing the projected UV light. Thereby, depending on the desired target transparency of the 3D component, the degree of diffusion through the optical means can be pre-adjusted. In addition, if the resin vat has an RFID tag, this can be further updated via the user interface by means of the RFID reader/writer after the retrofitting. Alternatively, a new appropriate RFID tag can be attached to the resin vat unit. According to the present invention the UV-transparent anti-adhesive flexible foil with the one or more frosted surfaces, or with the light diffusing particles, or with the micro lens array can be also separately provided to the user for retrofitting the resin vat unit for the purpose of smoothening the surface of the 3D printed components. Therefore, in an embodiment, the UV-transparent anti-adhesive flexible foil with the UV light diffusing optical means can be removably mounted to a frame assembly of the resin vat unit. Thereby the user can exchange a prior art UV-transparent anti-adhesive flexible foil with the UV-transparent anti-adhesive flexible foil having the UV light diffusing optical means or vice versa in accordance with the printing requirements. In another alternative embodiment, the user can exchange by means of the frame assembly a prior art UV-transparent plate with the UV-transparent plate having the UV light diffusing optical means or vice versa in accordance with the printing requirements. In another alternative embodiment, an additional transparent foil with micro lens arrays can be mounted into the frame assembly. The resin vat unit can be also provided as a unit which is partly integrated with the additive manufacturing apparatus.

### BRIEF DESCRIPTION OF THE DRAWINGS

In the subsequent description, further aspects and advantageous effects of the present invention will be described in more detail by using exemplary embodiments and by referring to the drawings, wherein:
Fig. 1 - is a schematic vertical cross-sectional partial view of an additive manufacturing apparatus according to an embodiment of the present invention;
Fig. 2 - is a schematic comparative example showing a vertical cross-sectional partial view of an additive manufacturing apparatus according to an embodiment (see EMB) and a vertical cross-sectional partial view of an additive manufacturing apparatus according to the prior art in a side by side arrangement for comparison;
Fig. 3 - is a schematic perspective view of an entirely detachable resin vat unit of the additive manufacturing apparatus according to an embodiment;
Fig. 4 - is a schematic perspective exploded view of the resin vat unit in Fig. 3;
Fig. 5 - is a schematic perspective top view of an inner frame of the frame assembly of the resin vat unit in Fig. 4;
Fig. 6 - is a schematic perspective bottom view of the inner frame in Fig. 4;
Fig. 7 - is a schematic cross-sectional view of the inner frame in Fig. 6, taken along the line I-I;
Fig. 8 - is a schematic enlarged view of the detail II in Fig. 7;
Fig. 9 - is a schematic bottom view of a UV-transparent anti-adhesive flexible foil with a frosted lower surface;
Fig. 10A - is a schematic view of a 3D component printed with translucent photocurable resin through the additive manufacturing apparatus according to an embodiment;
Fig. 10B - is a schematic view of a 3D component printed with translucent photocurable resin through the additive manufacturing apparatus according to the prior art;
Fig. 11A - is a schematic view of a clear aligner printed with translucent photocurable resin through the additive manufacturing apparatus according to an embodiment;
Fig. 11B - is a schematic view of the clear aligner in Fig. 11A placed on a denture model;
Fig. 11C - is a schematic view of an aligner printed with transparent photocurable resin through an additive manufacturing apparatus according to the prior art, and placed on a denture model.

The reference numbers shown in the drawings denote the elements as listed below and will be referred to in the subsequent description of the exemplary embodiments.
- 1.: Additive manufacturing apparatus
- 2.: 3D Component
2a. Dental aligner
- 3.: Resin vat unit
- 4.: Reservoir
4a. Aperture
4b. Grip
- 5.: UV light photocurable resin
- 6.: Frame assembly
6-1. Inner frame
6-1a. Inner frame element
6-1b. Inner frame element
6-1c. Screw
6-1d. Screw hole
6-2. Outer frame
6-2a. Air hole
6-2b. Air channel
6-2c. Hose
6-2d. Screw
6-2d' Screw
6-2e. Screw hole
6-2e' Screw hole
6-3. Sealing
6-4. UV-transparent window
6-4a. UV-transparent plate
6-4b. UV-transparent anti-adhesive flexible foil
6-5. Optical means (diffuser)
- 7.: Projection unit
- 8.: UV light
- 9.: Movable building platform
9a. Surface

### D: Denture Model

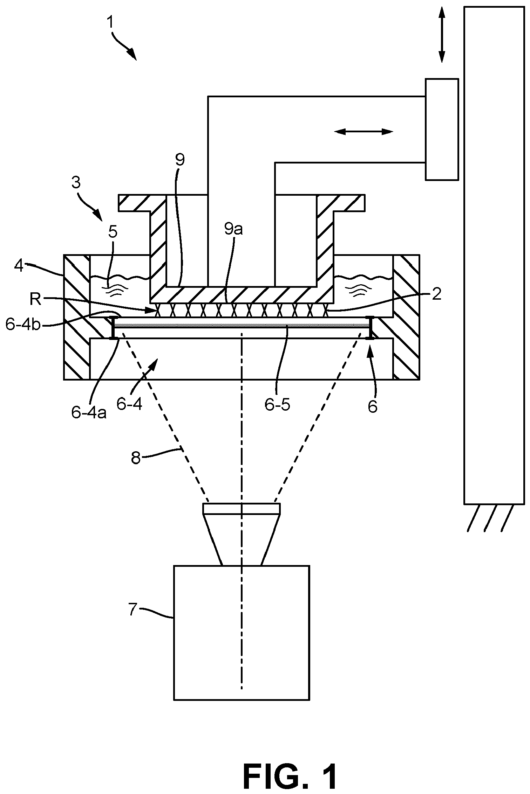

Fig. 1 shows an embodiment of an additive manufacturing apparatus (1) for additively manufacturing a 3D component (2). The additive manufacturing apparatus (1) has a resin vat unit (3) which includes a reservoir (4) for storing UV light photocurable resin (5), and a frame assembly (6) which holds a UV-transparent window (6-4) at the bottom of the reservoir (4). The UV-transparent window (6-4) includes a UV-transparent plate (6-4a) and a UV-transparent anti-adhesive flexible foil (6-4b). The UV-transparent plate (6-4a) is preferably a glass plate. Alternatively, a PMMA plate can be used. Furthermore, the additive manufacturing apparatus (1) has a projection unit (7) for projecting UV light (8) through the UV-transparent window (6-4) into the reservoir (4). The additive manufacturing apparatus (1) includes a movable building platform (9) that has a surface (9a) facing the bottom of the resin vat unit (3) onto which said 3D component (2) can be formed through layerwise curing of said resin (5) through the projection unit (7). The building platform (9) can be moved into and out of the reservoir (4). The building platform (9) can be also moved sideways within the reservoir (4). The additive manufacturing apparatus (1) also comprises a control unit (not shown) for controlling the overall operation. The UV-transparent window (6-4) further comprises an optical means (6-5) which is adapted to diffuse the projected UV light (8) towards the building platform (9) into the region (R) where the UV light photocurable resin (5) is to be layerwise cured. The optical means (6-5) is arranged in the light path of the projected UV light (8).

The working principle of the additive manufacturing apparatus (1) will be explained in more detail with reference to the comparative example in Fig. 2 which illustrates a schematic side by side arrangement of the additive manufacturing apparatus according to the embodiment in Fig. 1 and an additive manufacturing apparatus according to the prior art. As can be seen on the left-hand side of Fig. 2, the optical means (6-5) (illustrated through the grey region) diffuses the projected UV light such that the photocurable resin (5) in the proximity of the adjacent pixels onto which the diffuse UV light impinges is polymerized more smoothly. Thus, the curing process through the diffused UV light has an anti-aliasing effect. As can be seen on the right-hand side of Fig. 2, the UV-transparent anti-adhesive flexible foil (6-4b') has no diffusing effect. This results in a rough surface where the cured pixels form sharp edges.

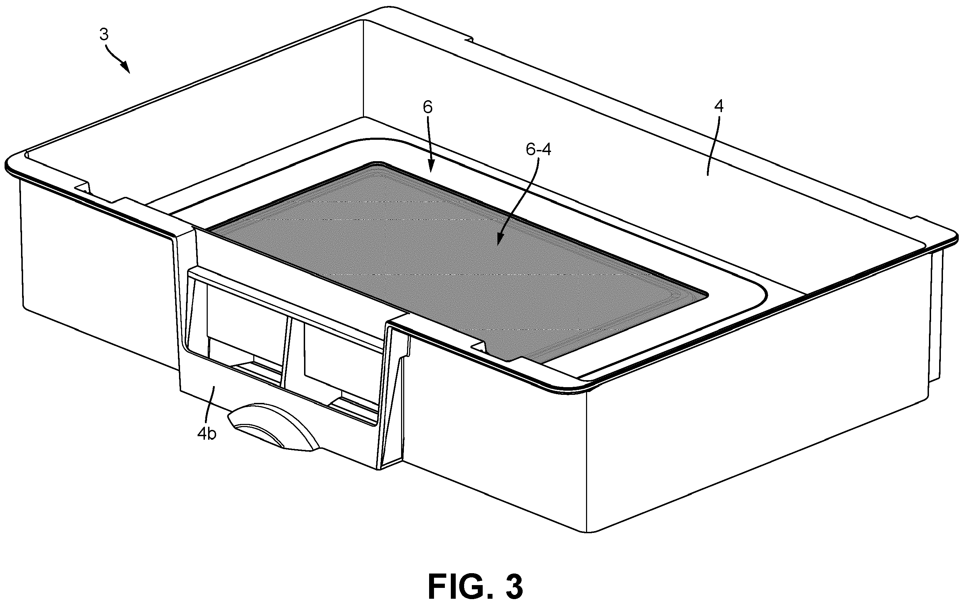

In alternative embodiments of the present invention, the said optical means (6-5) can be realized through frosting the upper surface and/or the lower surface of the UV-transparent anti-adhesive flexible foil (6-4b). Fig. 3 shows an embodiment in which only a lower surface of the UV-transparent anti-adhesive flexible foil (6-4b) has been frosted. Herein it is to be understood that the lower surface faces the projection unit (7) and is averted from the interior of the reservoir (4) such that it does not contact the photocurable resin (5). In the embodiment of Fig. 3, the upper surface of UV-transparent anti-adhesive flexible foil (6-4b) is smooth, thus not frosted in order to easily allow the peeling-off of the said flexible foil (6-4b) from the 3D component (2) attached to the surface (9a) of the movable building platform (9). During the printing process, each time after a layer has been polymerized through the projected UV light, the peeling-off can be achieved by an upward/downward movement of the building platform (9) so that new photocurable resin (5) can refill in the gap between the 3D component (2) and the UV-transparent anti-adhesive flexible foil (6-4b) on the bottom of the reservoir (4) for printing the next layer. Alternatively, both of the upper surface and lower surface, or only the upper surface of UV-transparent anti-adhesive flexible foil (6-4b) may be frosted.

In another alternative embodiment (not shown) of the present invention, the optical means (6-5) can be realized through providing light diffusing/scattering particles into the UV-transparent anti-adhesive flexible foil (6-4b). Also, in this embodiment it is preferable that the upper surface of UV-transparent anti-adhesive flexible foil (6-4b) including the light diffusing/scattering particles is smooth (not frosted) for enabling an easy peeling-off. Alternatively, the upper surface and/or the lower surface of the UV-transparent anti-adhesive flexible foil (6-4b) having the light diffusing/scattering particles may be additionally frosted.

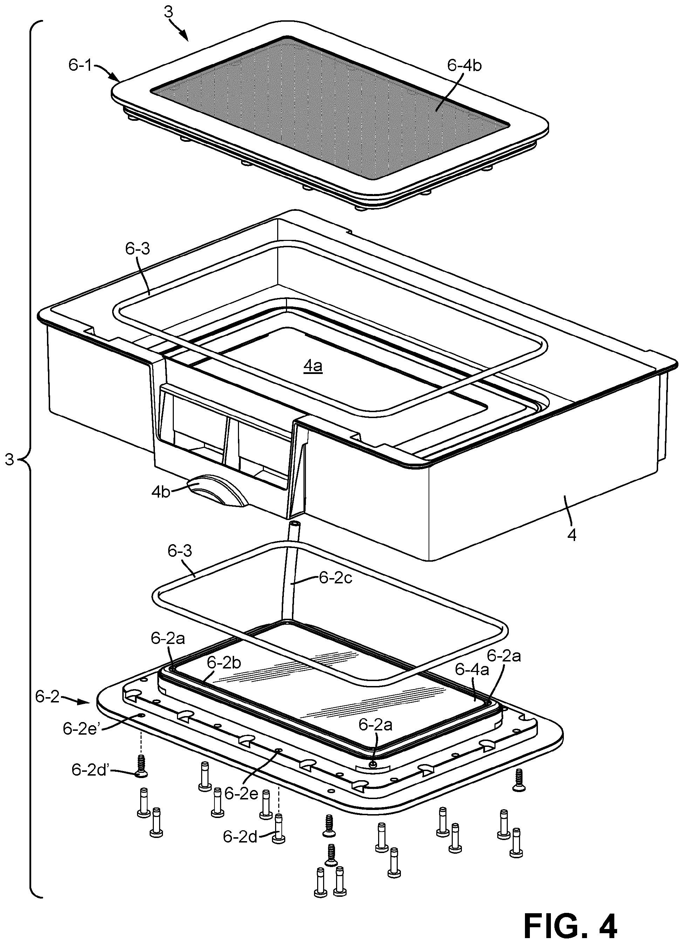

In other alternative embodiments (not shown) of the present invention, the said optical means (6-5) can be realized through frosting the upper surface and/or the lower surface of the UV-transparent plate (6-4a), and/or by including light diffusing/scattering particles in the UV-transparent plate (6-4a). In the embodiment shown in Fig. 4, the UV-transparent plate (6-4a) is totally transparent, thus not frosted and is provided without light diffusing/scattering particles.

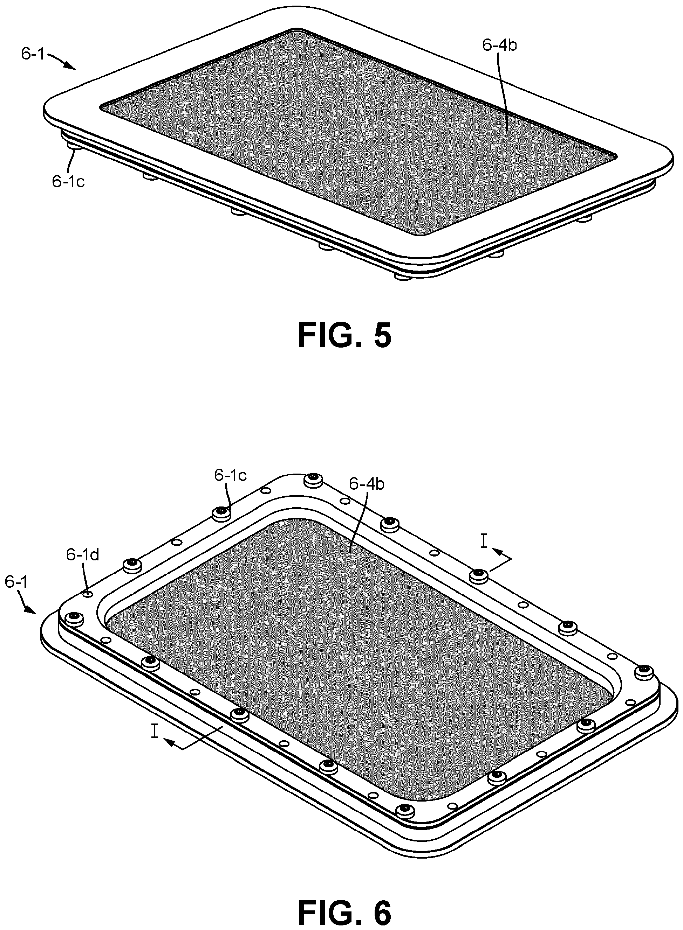

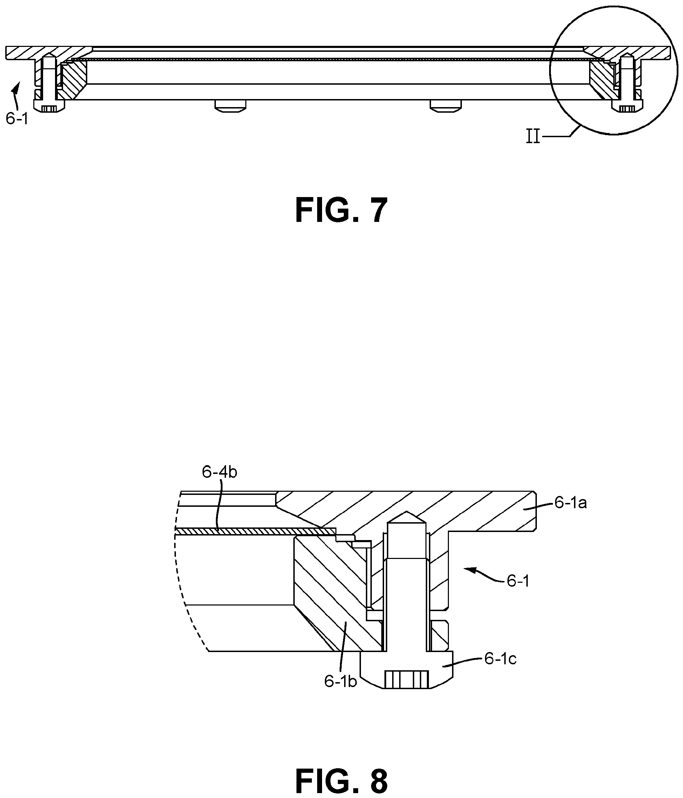

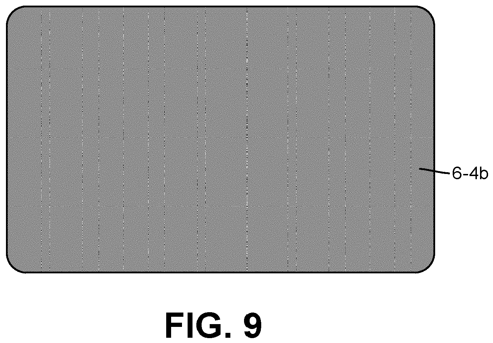

Hereinafter, the frame assembly (6) will be explained in more detail. As shown in Fig. 4, the frame assembly (6) comprises an inner frame (6-1) and an outer frame (6-2) which are respectively mounted on the inner side and the outer side of the aperture (4a) of the resin vat unit (3). A sealing (6-3) is preferably arranged between the interface of the inner frame (6-1) and the resin vat unit (3). Another sealing (6-3) is preferably arranged between the interface of the inner frame (6-1) and the outer frame (6-2). As shown in Fig. 8, the inner frame (6-1) has two inner frame elements (6-1a; 6-1b) which are attached to each other through the screws (6-1c). As shown in more detail in Fig. 8, the UV-transparent anti-adhesive flexible foil (6-4b) can be mounted by means of the frame assembly (6). The UV-transparent anti-adhesive flexible foil (6-4b) is sandwiched/clamped between the two inner frame elements (6-1a; 6-1b). The screws (6-1c) can be easily removed by the user to exchange the removable UV-transparent anti-adhesive flexible foil (6-4b). Fig. 9 shows the UV-transparent anti-adhesive flexible foil (6-4b) whose lower surface has been frosted. As shown in Fig. 4, the UV-transparent window (6-4) has air holes (6-2a) for communicating the interface between the UV-transparent anti-adhesive flexible foil (6-4b) and the UV-transparent plate (6-4a) with the atmosphere for more easily enabling the peeling-off process during the layerwise printing. As shown in Fig. 4, the UV-transparent plate (6-4a) is fixed on the outer frame (6-2) for example with an adhesive, alternatively it can be detachably seated on a sealing (not shown). The outer frame (6-2) has an air hole (6-2a) at each corner which are preferably connected with each other through a peripherally running air channel (6-2b). The air hole (6-2a) is preferably connected through a hose (6-2c) with the atmosphere. The outer frame (6-2) has screw holes (6-2e) for letting through the screws (6-2d) which are screwed into screw holes (6-1d) (see Fig 6). The outer frame (6-2) has also screw holes (6-2e') for letting through the screws (6-2d') which are screwed into screw holes (not shown) on the outer side of the resin vat unit (3). In the assembled state, the UV-transparent anti-adhesive flexible foil (6-4b) and the UV-transparent plate (6-4a) are stacked on each other and thereby together define the UV-transparent window (6-4a). Optionally, a frame-like spacer foil with a desired thickness (not shown), preferably 100 micrometers, can be arranged between them to secure more space for enabling an easier peeling off. The weight of the photocurable resin (5) in the resin vat unit (3) would cause a deflection of the UV-transparent anti-adhesive flexible foil (6-4b). The screws (6-2d) can be used also to adjust the tension on the said flexible foil (6-4b) when the inner frame (6-1) is clamped to the outer frame (6-2) with the elastic sealing (6-3) located in-between. The tighter the screws (6-2d) are fixed, the higher becomes the tension on the flexible foil (6-4b). As the screws (6-2d) are tightened, the UV-transparent anti-adhesive flexible foil (6-4b) is stretched across the UV-transparent plate (6-4a) and accordingly pressed against the latter due to the relative movement of the inner frame (6-1) towards the outer frame (6-2).

In an embodiment, the reservoir (4) and the frame assembly (6) including the UV-transparent window (6-4) are configured to define a detachable resin vat unit (3) which can be entirely detached through a user and taken manually out of the additive manufacturing apparatus (1). The UV-transparent plate (6-4a) can be also separately provided from the resin vat unit (3) so that the frame assembly (6) holds only the UV-transparent anti-adhesive flexible foil (6-4b). In such embodiment (not shown) the UV-transparent plate (6-4a) can be mounted into the chassis of the additive manufacturing apparatus (1) below the detachable resin vat unit (3). In this embodiment, the resin vat unit (3) preferably has a hand grip (4b) as shown in Fig. 3. The user can detach the resin vat unit (3) and retrofit the resin vat unit (3) by means of the frame assembly (6) with any desired UV-transparent anti-adhesive flexible foil (6-4b) or UV-transparent plate (6-4a) having the optical means (5) for diffusing the projected UV light.

In an embodiment, the detachable resin vat unit (3) preferably has an RFID tag (not shown) that includes information on the presence/absence of the said optical means (6-5) in the UV-transparent window (6-4). In this embodiment, the additive manufacturing apparatus has a corresponding RFID reader/writer (not shown) to recognize the type of resin vat unit (3) and update any information stored therein. The additive manufacturing apparatus (1) has also a control panel (not shown), preferably with a GUI for guiding the user.

Fig. 10A illustrates an embodiment in which a 3D component (2) has been printed using a transparent photocurable resin through an additive manufacturing apparatus of the present invention. In this embodiment the 3D component (2) has not been subjected to any mechanical surface treatment. It can be seen in Fig. 10A that the 3D component (2) has a high transparency because of the smooth surface, and the eagle in the background can be clearly seen in contrast to the prior art in Fig. 10B.

Fig. 11A and Fig. 11B illustrate another embodiment in which a dental aligner (2a) has been printed using a transparent photocurable resin through an additive manufacturing apparatus according to the present invention. Also, in this embodiment the aligner (2a) has not been subjected to any mechanical surface treatment and has been placed on a denture model (D). The denture model (D) has a gingiva part and teeth. It can be seen in Fig. 11B that the aligner (2a) has a high transparency because of its smooth surface, and the teeth cannot be clearly seen through the aligner (2a) in contrast to the prior art in Fig.11C.

## Claims

1. An additive manufacturing apparatus (1) for additively manufacturing a component (2), comprising:
a resin vat unit (3) which comprises: a reservoir (4) for storing UV light photocurable resin (5); and a UV-transparent window (6-4) at the bottom of the reservoir (4), wherein said UV-transparent window (6-4) includes a UV-transparent plate (6-4a) and a UV-transparent anti-adhesive flexible foil (6-4b);
a projection unit (7) for projecting UV light (8) through the UV-transparent window (6-4) into the reservoir (4);
a movable building platform (9) having a surface (9a) onto which said component (2) can be formed through layerwise curing of said resin (5);
**characterized in that**
the UV-transparent window (6-4) further comprises:
an optical means (6-5) which is adapted to diffuse the projected UV light (8) towards the building platform (9) into a region (R) where the UV light photocurable resin (5) is to be layerwise cured, wherein the optical means (6-5) is arranged in the light path of the projected UV light (8).

2. The additive manufacturing apparatus (1) according to claim 1, **characterized in that**
at least one of the upper surfaces and the lower surface of the UV-transparent anti-adhesive flexible foil (6-4b) is frosted, and the optical means (6-5) is realized through said one or more frosted surfaces of the UV-transparent anti-adhesive flexible foil (6-4b).

3. The additive manufacturing apparatus (1) according to claim 1 or 2, **characterized in that** the UV-transparent anti-adhesive flexible foil (6-4b) includes light diffusing particles, and the optical means (6-5) is realized through said light diffusing particles inside the UV-transparent anti-adhesive flexible foil (6-4b).

4. The additive manufacturing apparatus (1) according to any one of claims 1 to 3, **characterized in that** at least one of the upper surfaces and the lower surface of the UV-transparent plate (6-4a) is frosted, and the optical means (6-5) is realized through said one or more frosted surfaces of the UV-transparent plate (6-4a).

5. The additive manufacturing apparatus (1) according to any one of claims 1 to 4, **characterized in that** the UV-transparent plate (6-4a) includes light diffusing particles, and the optical means (6-5) is realized through said light diffusing particles inside the UV-transparent plate (6-4a).

6. The additive manufacturing apparatus (1) according to any one of claims 1 to 5, **characterized in that** the optical means (6-5) comprises a matrix of light diffusing microlenses.

7. The additive manufacturing apparatus (1) according to any one of claims 1 to 6, **characterized in that** the reservoir (4) and the UV-transparent window (6-4) are configured to define a detachable resin vat unit (3) which can be detached through a user from the additive manufacturing apparatus (1).

8. The additive manufacturing apparatus (1) according to claim 7, **characterized by** further comprising an RFID reader/writer, and wherein the detachable resin vat unit (3) comprises an RFID tag that includes information on the presence/absence of the optical means (6-5) in the UV-transparent window (6-4).

9. The additive manufacturing apparatus (1) according to any one of claims 1 to 8, **characterized in that** said UV-transparent anti-adhesive flexible foil (6-4b) is removably mounted to the resin vat unit (3).

10. A UV-transparent anti-adhesive flexible foil (6-4b) suitable for use in the additive manufacturing apparatus (1) according to claim 9, wherein at least one of the upper surface and the lower surface of the UV-transparent anti-adhesive flexible foil (6-4b) is frosted and/or the UV-transparent anti-adhesive flexible foil (6-4b) includes light diffusing particles.
